Europäisches Patentamt

European Patent Office

Office européen des brevets

(11) Numéro de publication : **0 098 761**
**B1**

(12) **FASCICULE DE BREVET EUROPÉEN**

(45) Date de publication du fascicule du brevet :
05.03.86

(51) Int. Cl.⁴ : **A 23 L 3/00**, A 23 B 7/156,
A 23 B 7/06, A 23 B 7/02

(21) N° méro de dépôt : 83401183.5

(22) Date de dépôt : 09.06.83

(54) Procédé d'amélioration du rendement technique et de la qualité des conserves de champignons.

(30) Priorité : 11.06.82 FR 8210373

(43) Date de publication de la demande :
18.01.84 Bulletin 84/03

(45) Mention de la délivrance du brevet :
05.03.86 Bulletin 86/10

(84) Etats contractants désignés :
AT BE CH DE FR GB IT LI LU NL SE

(56) Documents cités :
FR-A- 540 867
FR-A- 543 755
FR-A- 2 280 328
FR-A- 2 370 438
FR-A- 2 400 848
FR-A- 2 421 566
US-A- 1 637 068
US-A- 2 728 676
US-A- 4 183 963

(73) Titulaire : **ROYAL CHAMPIGNON S.A.**
**Chantemerle Bagneux**
**F-49416 Saumur Cedex (FR)**

(72) Inventeur : **Agulhon, Claude**
**33 Grande Rue**
**F-49580 Varrains (FR)**

(74) Mandataire : **Ahner, Francis et al**
**CABINET REGIMBEAU 26, avenue Kléber**
**F-75116 Paris (FR)**

## Description

La présente invention concerne un procédé de traitement de champignons pour améliorer le rendement technique et la qualité des conserves de champignons, par blocage des oxydations enzymatiques avant cuisson, du type faisant appel à un dégazage des champignons.

Dans la technique antérieure, les champignons sont généralement soumis, avant l'opération de stérilisation, à une opération de blanchiment destinée à remplir les fonctions suivantes :

— dégazer les champignons pour éviter leur oxydation, le bombage des boîtes et l'apparition de « becquets » lors du refroidissement ;

— réduire le volume des champignons de manière à pouvoir mettre dans les boîtes ou bocaux une quantité telle qu'après l'opération de stérilisation on ait exactement le poids légal net égoutté, et

— attendrir la texture des champignons pour éviter toutes difficultés lors du remplissage, telles que des cassures des champignons ou encore des accidents lors du sertissage des boîtes.

Cette technique classique du blanchiment des champignons est cependant responsable d'un certain nombre d'inconvénients importants :

a) Au cours de cette opération de blanchiment dans l'eau ou dans la vapeur fluente, le champignon peut perdre jusqu'à environ 45 % de son poids en matière sèche, ce qui explique un rendement technique médiocre et une perte considérable de goût. Les techniciens de la conservation savent d'ailleurs que la cuisson dite « à l'étuvée » a un meilleur rendement technique et qualitatif, mais constitue cependant un goulot d'étranglement lors de la production. De surcroît, cette technique oxyde beaucoup trop les champignons qui présentent alors une teinte trop foncée.

b) L'opération de blanchiment est en outre une opération coûteuse en énergie thermique.

c) Le blanchiment est une source de pollution. En effet, l'essentiel de la demande biologique en oxygène (D.B.O.) d'une conserverie de champignons est souvent lié au blanchiment, en particulier du fait de la libération de protéines ou d'amidon.

d) L'opération de blanchiment s'accompagne souvent de l'utilisation de produits chimiques difficilement tolérés ou en voie d'interdiction auprès de diverses administrations nationales.

Dans là technique antérieure on a déjà proposé un certain nombre de procédés permettant d'éviter la pratique du blanchiment. Cependant, aucun de ces procédés ne permet de produire simultanément tous les effets d'une opération de blanchiment, aussi ces procédés doivent-ils toujours être accompagnés d'autres traitements. Un seul traitement sous vide permet par exemple de dégazer les champignons, mais loin d'en réduire le volume, ce traitement a tendance à l'augmenter. Il ne peut donc pas y avoir le poids requis dans le récipient pour obtenir un poids net égoutté suffisant après stérilisation. FR-A-2 280 328 vise un tel type de procédé qui présente tous ces inconvénients et qui de surcroît ne permet pas de supprimer l'opération de blanchiment.

Conformément à la présente invention, en vue d'éviter le blanchiment, le dégazage des champignons est obtenu par traitement sous vide partiel associé à une imprégnation à l'aide d'une solution saline permettant une perte d'eau par osmose. En effet, après retour à la pression ordinaire, l'équilibre osmotique est tel que le poids net égoutté des champignons se retrouve égal ou au moins sensiblement voisin du poids initial des champignons parés. Cet équilibre s'établit au bout d'un temps de repos qui varie en fonction inverse de la concentration saline de la solution d'imprégnation.

Le procédé objet de la présente invention permet donc de remplir successivement les fonctions suivantes :

— dégazage et remplissage des méats des champignons par la solution saline ;

— déshydratation par effet osmotique, et

— augmentation consécutive de la densité des champignons.

La combinaison de ces différents effets résultant du procédé de l'invention, conduit au même résultat qu'une opération classique de blanchiment, avec cependant les avantages additionnels suivants :

— pas ou pratiquement aucune perte de matière sèche, et

— absence de perte des produits aromatiques sous l'effet de la chaleur, cette dernière n'intervenant que lorsque le récipient se trouve hermétiquement clos.

La mise en œuvre du procédé objet de la présente invention permet d'obtenir des champignons crus qui sont hermétiquement enfermés dans une faible quantité d'eau et qui ne peuvent donc subir aucune perte au cours de la cuisson. Les migrations des produits solubles dans l'eau de cuisson sont limitées par l'équilibre osmotique obtenu par exemple entre environ 500 g de champignons crus et 450 g d'eau. Le rendement technique est donc excellent. Ce rendement est d'autant meilleur qu'après refroidissement, le champignon a retrouvé sa turgescence. Il libère en effet du sel dans l'eau pure de jutage et absorbe de l'eau exempte de sel pour réaliser un équilibre osmotique.

Le procédé selon l'invention est caractérisé en ce que les champignons sont soumis à un vide partiel inférieur à $27 \cdot 10^3$ Pa (200 mm Hg) directement dans une solution saline aqueuse contenant de 15 à 60 g/l de chlorure de sodium, et en ce que, après rupture du vide partiel, les champignons sont maintenus à la pression normale dans ladite solution saline aqueuse pendant une période de 30 minutes à 12 heures.

De façon classique, ce procédé peut être précédé d'une première opération de parage des champignons, qui peut être effectuée de façon manuelle ou mécanique.

2

Dans la pratique l'application d'une pression partielle comprise entre environ $1,6 \cdot 10^3$ Pa (12 mm Hg) et environ $2 \cdot 10^3$ Pa (15 mm Hg) conduit à des résultats parfaitement satisfaisants et en particulier à un dégazage parfaitement efficace. Après retour à la pression atmosphérique, la phase de repos dans la solution saline est poursuivie pendant une période variable, comprise entre environ 30 minutes et environ 12 heures. Cette période de repos dépend de la concentration de la solution saline.

Lorsque l'on utilise une solution de chlorure de sodium concentrée à 60 g/l, un temps de repos d'environ 30 minutes s'avère généralement suffisant. Lorsque l'on diminue la concentration de la solution saline, il devient alors nécessaire de prolonger la période de repos des champignons dans cette solution saline.

Après cette étape de repos dans la solution saline on procède de façon classique à un égouttage des champignons puis à un remplissage volumétrique ou pondéral des boîtes à l'aide des champignons ainsi traités. Dans la pratique, le remplissage des boîtes s'effectue par exemple par pesage d'environ 500 à environ 550 g de champignons ainsi traités, par boîte 4/4. Enfin, le jutage des champignons est de préférence réalisé avec de l'eau chaude. On procède ensuite à la stérilisation des boîtes ainsi remplies.

Selon une caractéristique additionnelle de la présente invention, la solution saline d'imprégnation peut en outre contenir de l'acide critique à une concentration d'environ 1 g/l. Dans pareil cas, l'opération de jutage peut être conduite avec de l'eau pure. En revanche, lorsque la solution saline d'imprégnation ne contient pas d'acide citrique, il est possible de conduire l'opération de jutage en utilisant de l'eau chaude légèrement acidulée à 1 g/l d'acide citrique.

On rapportera ci-après à titre d'exemples un certain nombre de résultats expérimentaux traduisant l'effet du dégazage puis de la concentration saline sur le poids net des champignons.

Les champignons sont imprégnés dans la solution saline sous une pression absolue de $1,6 \cdot 10^3$ Pa (12 mm Hg). On note alors l'évolution du poids égoutté obtenu à partir de 1 000 g de champignons pieds coupés. Les résultats sont reportés dans le tableau I ci-dessous :

Tableau I

| NaCl | P0 | P1 | P2 | P3 | P4 |
|------|------|------|------|------|------|
| 0 g/litre | 1000 | 1750 | 1800 | 1800 | 1810 |
| 5 g/l | 1000 | 1700 | 1700 | 1700 | 1050 |
| 10 g/l | 1000 | 1650 | 1570 | 1500 | 1050 |
| 20 g/l | 1000 | 1500 | 1320 | 1200 | 1050 |
| 40 g/l | 1000 | 1350 | 1150 | 1150 | 1050 |
| 80 g/l | 1000 | 1200 | 1050 | 1050 | 1050 |
| 160 g/l | 1000 | 1170 | 1000 | 1000 | 950 |
| 320 g/l | 1000 | 1100 | 950 | 950 | 900 |

P0 = poids initial
P1 = poids après imprégnation
P2 = poids 30 minutes plus tard
P3 = poids 1 heure plus tard
P4 = poids 12 heures plus tard.

On notera que pour les concentrations salines inférieures à 80 g/l, on obtient un poids constant au bout d'un temps qui dépend de la concentration saline. Les 50 g supplémentaires correspondent au rattrapage du poids perdu par évaporation au stockage frigorifique.

Exemple comparatif concernant les champignons de Paris variété « petit blanc »

Les champignons sont parés à sec pour la commodité des calculs expérimentaux. La perte de poids au parage étant de 20 %, on exprimera le rendement technique (r) de la façon suivante :

$$r = \frac{PNE}{PB} \qquad r = \frac{PNE}{1,25 \, PC}$$

PNE = poids net égoutté après stérilisation
PC = poids des champignons queues coupées à sec
PB = poids brut avant parage.

On notera au préalable qu'il n'est pas possible de mettre plus de 300 g de champignons crus dans une boîte 4/4.

Témoin :

On blanchit 1 000 grammes de champignons pendant 14 minutes à 97 °C dans 4 litres d'eau. On obtient ainsi 750 grammes de champignons blanchis. On emboîte à raison de 475 grammes de champignons dans une boîte 4/4. Le jutage est effectué avec 15 g/l de sel et 1 g/l d'acide citrique. Après stérilisation, le poids net égoutté est de 460 grammes. Le rendement technique s'exprime donc de la manière suivante :

$$r = \frac{750}{1\ 250} \times \frac{460}{475} = 58\ \%$$

Expérimentation par mise en œuvre du procédé selon l'invention :

On trempe 1 000 grammes sous un vide partiel de $1{,}6 \cdot 10^3$ Pa (12 mm Hg) dans une solution de chlorure de sodium concentrée à 60 g/l à laquelle on ajoute de l'acide citrique à raison d'une concentration d'1 g/l. Après passage sous vide, le poids P1 est de 1 350 grammes. 30 minutes plus tard, le poids n'est plus que de 1 150 grammes et il reste pratiquement constant. Le gain de 15 % compense une importante perte lors du stockage frigorifique, ce qui explique d'ailleurs le bon rendement du témoin.

On effectue alors un remplissage volumétrique d'une boîte 4/4, ce qui donne 570 grammes. Le jutage est effectué à l'aide d'eau chaude.

L'opération de stérilisation est pratiquée de façon classique en même temps que sur la boîte témoin, soit environ 20 minutes à une température de 126 °C.

On obtient alors un poids net égoutté après stérilisation de 470 grammes.

Le rendement technique s'exprime donc de la manière suivante :

$$r = \frac{470}{1\ 000 \times 1{,}15 \times \dfrac{570}{1\ 150}} = 73{,}5\ \%$$

L'amélioration du rendement technique est donc hautement significative par rapport au témoin, puisqu'elle est de 73,5/58, soit 26 % en poids.

**Revendications**

1. Procédé de traitement de champignons pour améliorer le rendement technique et la qualité des conserves de champignons, par blocage des oxydations enzymatiques avant cuisson, du type faisant appel à un dégazage des champignons, caractérisé en ce que les champignons sont soumis à un vide partiel inférieur à $27 \cdot 10^3$ Pa directement dans une solution saline aqueuse contenant de 15 à 60 g/l de chlorure de sodium, et en ce que, après rupture du vide partiel, les champignons sont maintenus à la pression normale dans ladite solution saline aqueuse pendant une période de 30 minutes à 12 heures.

2. Procédé selon la revendication 1, caractérisé en ce que la pression est comprise entre environ $1{,}6 \cdot 10^3$ Pa et environ $2 \cdot 10^3$ Pa.

3. Procédé selon l'une des revendications 1 et 2, caractérisé en ce que ladite solution saline contient en outre de l'acide citrique à une concentration d'environ 1 g/litre.

4. Procédé selon l'une des revendications 1 à 3, caractérisé en ce qu'il est complété par les opérations successives suivantes :
— remplissage volumétrique ou pondéral des boîtes à l'aide des champignons ainsi traités ;
— jutage des champignons de préférence avec de l'eau chaude, et
— stérilisation des boîtes ainsi remplies.

**Claims**

1. Method for the treatment of mushrooms in order to improve the technical production and the quality of tinned mushrooms, by blocking enzymatic oxidation before cooking, of the type making use of the removal of gas from the mushrooms, characterised in that the mushrooms are subjected to a partial vacuum less than $27 \cdot 10^3$ Pa directly in an aqueous saline solution containing from 15 to 60 g/l sodium chloride and in that, after breaking the partial vacuum, the mushrooms are kept at normal pressure in the said aqueous saline solution for a period from 30 minutes to 12 hours.

2. Method according to Claim 1, characterised in that the pressure is comprised between approximately $1{.}6 \cdot 10^3$ Pa and approximately $2 \cdot 10^3$ Pa.

3. Method according to one of Claims 1 and 2, characterised in that the said saline solution also contains citric acid at a concentration of approximately 1 g/litre.

4. Method according to one of Claims 1 to 3, characterised in that it is completed by the following successive operations :
— filling of the tins by volume or weight with mushrooms treated in this way ;
— providing juice for the mushrooms preferably with hot water and
— sterilisation of the tins filled in this way.


**Patentansprüche**

1. Verfahren zur Behandlung von Pilzen zur Verbesserung der technischen Ausbeute und der Qualität von Pilzkonserven durch Blockieren der enzymatischen Oxydation der noch ungekochten Pilze, in der Weise, daß eine Entgasung der Pilze erfolgt, dadurch gekennzeichnet, daß die Pilze direkt in einer wässrigen Salzlösung enthaltend 15 bis 60 g/l Natriumchlorid einem Unterdruck von weniger als $27 \cdot 10^3$ Pa unterworfen werden, und daß, nach Aufheben des Unterdruckes, die Pilze bei normalem Druck über einen Zeitraum von 30 Minuten bis 12 Stunden in der genannten wässrigen Salzlösung gelassen werden.

2. Verfahren nach Anspruch 1, dadurch gekennzeichnet, daß der Druck zwischen ungefähr $1,6 \cdot 10^3$ Pa und ungefähr $2 \cdot 10^3$ Pa liegt.

3. Verfahren nach einem der Ansprüche 1 und 2, dadurch gekennzeichnet, daß die genannte Salzlösung weiters Zitronensäure mit einer Konzentration von ungefähr 1 g/Liter enthält.

4. Verfahren nach einem der Ansprüche 1 bis 3, dadurch gekennzeichnet, daß dieses durch die folgenden sukzessiven Arbeitsgänge vervollständigt wird :
— volumsmäßiges oder gewichtsmäßiges Füllen der Dosen mit den so behandelten Pilzen ;
— Auffüllen, vorzugsweise durch Zugabe von heißem Wasser zu den Pilzen und
— Sterilisieren der so gefüllten Dosen.